# EUROPEAN PATENT SPECIFICATION

(11) **EP 3 062 576 B1**
(45) Date of publication and mention of the grant of the patent: **02.01.2019**
(21) Application number: 13897574.3
(22) Date of filing: 14.11.2013
(51) Int. Cl.: H04W 76/16, H04W 36/00

(54) **CIRCUIT SWITCHED FALL BACK USER DEVICE IDENTIFICATION METHOD AND DEVICE**
IDENTIFIKATIONSVERFAHREN UND VORRICHTUNG FÜR LEITUNGSVERMITTELTE FALLBACK-BENUTZERVORRICHTUNG
DISPOSITIF ET PROCÉDÉ D'IDENTIFICATION DE DISPOSITIF UTILISATEUR EN REPLI PAR COMMUTATION DE CIRCUIT

(43) Date of publication of application: 31.08.2016
(73) Proprietor: Huawei Technologies Co., Ltd., Longgang District Shenzhen, Guangdong 518129 (CN)
(72) Inventor: ZHANG, Chongming, Shenzhen Guangdong 518129 (CN); XUE, Huaijie, Shenzhen Guangdong 518129 (CN); LIN, Jie, Shenzhen Guangdong 518129 (CN)
(74) Representative: Epping - Hermann - Fischer
(86) International application number: PCT/CN2013/087169
(87) International publication number: WO 2015/070425

(56) References cited:
- CN-A- 101 854 600
- CN-A- 103 167 564
- CN-A- 103 313 426
- US-A1- 2013 258 888
- ZTE: "Some scenarios potentially requiring new UE indications", 3GPP DRAFT; R2-120048 SOME SCENARIOS POTENTIALLY REQUIRING NEW UE INDICATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 30 January 2012 (2012-01-30), XP050565081, [retrieved on 2012-01-30]
- RAN2: "Draft reply LS on CSFB awareness in UMTS", 3GPP DRAFT; R2-116424, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 18 November 2011 (2011-11-18), XP050564635, [retrieved on 2011-11-18]

## Description

### TECHNICAL FIELD

The present invention relates to the communications field, and in particular, to a method and a device for identifying circuit switched fallback user equipment.

### BACKGROUND

Circuit switched fallback (Circuit Switched Fall Back, CSFB) is a communications technology (a 3GPP standard LTE (Long Term Evolution, Long Term Evolution) voice solution) that provides a voice service based on a circuit switched network. In a background that dual-mode or multimode user equipment having LTE and UTRAN (UMTS Terrestrial Radio Access Network-Universal Mobile Telecommunications System terrestrial radio access network)/GSM (Global System for Mobile Communications, Global System for Mobile Communications) access capabilities cannot receive/send a circuit switched service signal when performing LTE access, the solution is proposed. In order to enable the user equipment to initiate a CS service such as a voice service, receive paging of a CS service such as a voice service, and correctly process an ongoing PS service of the user equipment in an LTE network in a case of an LTE access, a CSFB technology is generated.

When UE in LTE coverage is to process a voice service, the user equipment falls back to a circuit switched (Circuit Switched, CS) network first and processes the voice service in the CS network, so that an objective of reusing an existing CS device to provide a conventional voice service to user equipment in an LTE network is achieved. The circuit switched network includes a GSM network and a UTRAN network.

Because CSFB user equipment cannot be identified in the prior art, where the CSFB user equipment refers to user equipment that falls back from an LTE cell to a 2G/3G cell, in a GSM cell, a normal call process specific to non-CSFB user equipment is used for the CSFB user equipment. In the normal call process, signaling exchange between user equipment and a device on a network side is relatively complex. For example, the user equipment needs to complete a series of signaling exchange processes such as a location area update process, a routing area
update process, classmark acquiring, authentication, encryption, identity identification, and temporary mobile subscriber identity (temporary mobile subscriber identity, TMSI) reallocation. For the non-CSFB user equipment, a delay brought by the signaling exchange is not significant; however, for the CSFB user equipment, an existing signaling exchange delay in the LTE cell and a delay of reselection from the LTE cell to the GSM cell are already very significant, and in addition to a signaling exchange delay in the GSM cell, an overall delay for call establishment of the CSFB user equipment is relatively long; therefore, it is difficult to satisfy requirements of operators and user equipment. If CSFB user equipment can be identified, for the user equipment, a signaling exchange part in a normal call process can be simplified, thereby shortening a delay and accelerating call establishment of the CSFB user equipment.

CN 103313426 A relates to a signaling connection establishment cause indication method, a signaling connection establishment cause identification method, a signaling connection establishment cause indication device and a signaling connection establishment cause identification device. The methods comprise the following steps: a user equipment (UE) resides in a second network system after receiving an RRC (radio resource control) message in a first network system, sets values of a first variable and a second variable in pre-reorientation information carried by an RRC connection establishment request message, and transmits the request message to an access network control node in the second network system; the access network control node in the second network system acquires the values of the first and second variables in the pre-reorientation information carried by the request message after receiving the RRC connection establishment request message; and whether an establishment cause for RRC connection is a CSFB (circuit switched fall back) call or not is identified according to the two values. Specifically, the first variable refers to the pre-redirection information Pre-Redirection info in Support of E-UTRA FDD (frequency division duplex support E-UTRA frequency), the second variable refers to the pre-redirection information in the Pre-Redirection info in Support of E-UTRA TDD (time division duplex frequency support E-UTRA frequency). When the Support of E-UTRA FDD values and Support of E-UTRA TDD values are False, this indicates the UE initiated RRC connection establishment cause as a CSFB call. Therefore the CSFB call can be accurately identified through the access network control node in the second network system, and admission control in an RRC connection establishment stage is realized.

### SUMMARY

The objective of the present invention is to provide a method for identifying circuit switched fallback user equipment, so as to resolve a problem in an existing circuit switched fallback communications method that a device on a network side cannot identify that user equipment is circuit switched fallback CSFB user equipment in a channel request phase of the user equipment, resulting in an increase in a signaling exchange time and a time spent by the CSFB user equipment in accessing an circuit switched network, and leading to a relatively long overall CSFB delay.

With reference to a first aspect, a device for identifying circuit switched fallback user equipment includes:
a determining unit, configured to determine identification parameters of the circuit switched fallback CSFB user equipment and common user equipment, where the identification parameter of the CSFB user equipment is different from the identification parameter of the common user equipment;
a receiving unit, configured to receive a channel request message sent by user equipment UE; and
an identification unit, configured to identify the CSFB user equipment according to content of the channel request message and the identification parameter of the CSFB user equipment, where
the common user equipment refers to user equipment except the CSFB user equipment.

The identification parameter includes a new establishment causes indication NECI when the CSFB user equipment serves as a caller and a channel type indication when the CSFB user equipment serves as a callee.

With reference to the first aspect, in a first possible implementation manner of the first aspect, the device further includes:
a first configuration unit, configured to configure a new establishment causes indication NECI parameter value of a first base station subsystem of a first standard to an NECI value of the common user equipment, so that the first base station subsystem delivers the NECI value of the common user equipment to the common user equipment; and
a sending unit, configured to send an NECI value of the CSFB user equipment to a second base station subsystem of a second standard, so that the second base station subsystem delivers the NECI value of the CSFB user equipment to the CSFB user equipment.

With reference to the first aspect, in a second possible implementation manner of the first aspect, the device further includes:
a second configuration unit, configured to configure a channel type indication, sent by a first base station subsystem of a first standard to the common user equipment, to a channel type indication of the common user equipment, so that the first base station subsystem sends the channel type indication of the common user equipment to the common user equipment.

With reference to the second possible implementation manner of the first aspect, in a third possible implementation manner of the first aspect, the second configuration unit specifically includes:
a receiving subunit, configured to receive a paging message sent by a mobile switching center MSC; and
a configuration subunit, configured to: when a channel type indication included in the paging message is the channel type indication of the common user equipment, configure the channel type indication, sent by the first base station subsystem to the common user equipment, to the channel type indication of the common user equipment; or
configured to: when a channel type indication included in the paging message is a channel type indication of the CSFB user equipment, configure the channel type indication, sent by the first base station subsystem to the common user equipment, to the channel type indication of the common user equipment; or
configured to: when the paging message does not include a channel type indication, configure the channel type indication, sent by the first base station subsystem to the common user equipment, to the channel type indication of the common user equipment.

With reference to the second possible implementation manner of the first aspect or the third possible implementation manner of the first aspect, in a fourth possible implementation manner of the first aspect, the second configuration unit is further configured to configure a channel type indication, sent by a second base station subsystem of a second standard to the CSFB user equipment, to the channel type indication of the CSFB user equipment.

With reference to the second to fourth possible implementation manners of the first aspect, in a fifth possible implementation manner of the first aspect, the channel type indication of the common user equipment is one of the following channel type indications: supporting only a full-rate traffic channel TCH/F type indication, supporting a half-rate traffic channel or full-rate traffic channel TCH/H or TCH/F type indication, and supporting a standalone dedicated control channel SDCCH type indication; and/or the channel type indication of the CSFB user equipment is a-supporting any channel Any Channel type indication.

With reference to the first to fifth possible implementation manners of the first aspect, in an sixth possible implementation manner of the first aspect, the first base station subsystem of the first standard is a base station in a Global System for Mobile Communications GSM network, and the second base station subsystem of the second standard is an evolved Node B eNB in a Long Term Evolution LTE network.

With reference to the first aspect or the first to sixth possible implementation manners of the first aspect, in a seventh possible implementation manner of the first aspect, the identification unit includes:
a determining subunit, configured to determine whether the content of the channel request message belongs to content of a channel request message corresponding to the identification parameter of the CSFB user equipment; and
an identification unit, configured to: if a determining result of the determining subunit is yes, determine that the user equipment that sends the channel request message is the CSFB user equipment.

With reference to a second aspect, a method for identifying circuit switched fallback user equipment includes:
determining identification parameters of the circuit switched fallback CSFB user equipment and common user equipment, where the identification parameter of the CSFB user equipment is different from the identification parameter of the common user equipment;
receiving a channel request message sent by user equipment UE; and
identifying the CSFB user equipment according to content of the channel request message and the identification parameter of the CSFB user equipment, where
the common user equipment refers to user equipment except the CSFB user equipment.

The identification parameter includes a new establishment causes indication NECI when the the CSFB user equipment serves as a caller and a channel type indication when the the CSFB user equipment serves as a callee.

With reference to the second aspect, in a first possible implementation manner of the third aspect, the method further includes:
configuring a new establishment causes indication NECI parameter value of a first base station subsystem of a first standard to an NECI value of the common user equipment, so that the first base station subsystem delivers the NECI value of the common user equipment to the common user equipment; and
sending an NECI value of the CSFB user equipment to a second base station subsystem of a second standard, so that the second base station subsystem delivers the NECI value of the CSFB user equipment to the CSFB user equipment.

With reference to the second aspect, in a second possible implementation manner of the second aspect, the method further includes:
configuring a channel type indication, sent by a first base station subsystem of a first standard to the common user equipment, to a channel type indication of the common user equipment, so that the first base station subsystem sends the channel type indication of the common user equipment to the common user equipment.

With reference to the second possible implementation manner of the second aspect, in a third possible implementation manner of the second aspect, the configuring a channel type indication, sent by a first base station subsystem of a first standard to the common user equipment, to a channel type indication of the common user equipment specifically includes:
receiving a paging message sent by a mobile switching center MSC; and
when a channel type indication included in the paging message is the channel type indication of the common user equipment, configuring the channel type indication, sent by the first base station subsystem to the common user equipment, to the channel type indication of the common user equipment; or
when a channel type indication included in the paging message is a channel type indication of the CSFB user equipment, configuring the channel type indication, sent by the first base station subsystem to the common user equipment, to the channel type indication of the common user equipment; or
when the paging message does not include a channel type indication, configuring the channel type indication, sent by the first base station subsystem to the common user equipment, to the channel type indication of the common user equipment.

With reference to the second possible implementation manner of the second aspect or the third possible implementation manner of the second aspect, in a fourth possible implementation manner of the third aspect, a channel type indication, sent by a second base station subsystem of a second standard to the CSFB user equipment, is configured to the channel type indication of the CSFB user equipment.

With reference to the second to fourth possible implementation manners of the second aspect, in a fifth possible implementation manner of the second aspect, the channel type indication of the common user equipment is one of the following channel type indications: a supporting only full-rate traffic channel TCH/F type indication, supporting a half-rate traffic channel or full-rate traffic channel TCH/H or TCH/F type indication, and a supporting standalone dedicated control channel SDCCH type indication; and/or the channel type indication of the CSFB user equipment is a supporting any channel Any Channel type indication.

With reference to the first to fifth possible implementation manners of the second aspect, in an sixth possible implementation manner of the third aspect, the first base station subsystem of the first standard is a base station in a Global System for Mobile Communications GSM network, and the second base station subsystem of the second standard is an evolved Node B eNB in a Long Term Evolution LTE network. With reference to the second aspect or any one of the first to sixth possible implementation manners of the second aspect, in a seventh possible implementation manner of the second aspect, the identifying the CSFB user equipment according to content of the channel request message and the identification parameter of the CSFB user equipment includes:
determining whether the content of the channel request message belongs to content of a channel request message corresponding to the identification parameter of the CSFB user equipment; and
if the content of the channel request message belongs to content of a channel request message corresponding to the identification parameter of the CSFB user equipment, determining that the user equipment that sends the channel request message is the CSFB user equipment.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an implementation flowchart of circuit switched fallback in the prior art;
FIG. 2 shows a device for identifying circuit switched fallback user equipment according to an embodiment of the present invention;
FIG. 3 is a schematic structural diagram of a device for identifying circuit switched fallback user equipment according to an embodiment of the present invention;
FIG. 4 is an implementation flowchart of a method for identifying circuit switched fallback user equipment according to an embodiment of the present invention;
FIG. 5 is an implementation flowchart of initiating, by CSFB user equipment serving as a caller in a GSM cell (CSFB MO for short), a channel request according to an embodiment of the present invention; and
FIG. 6 is an implementation flowchart of initiating, by CSFB user equipment serving as a callee in a GSM cell (CSFB MT for short), a channel request according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

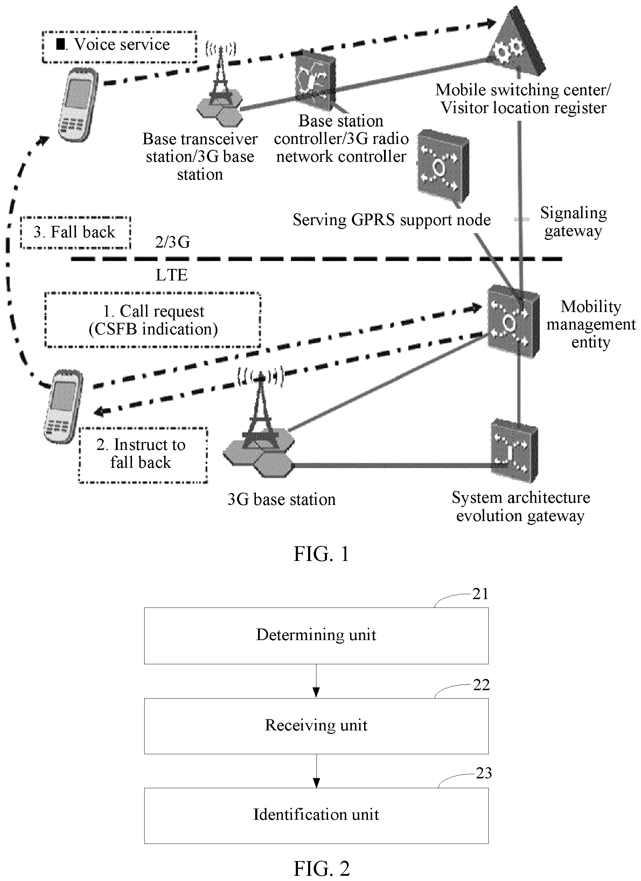

Referring to FIG. 1, FIG. 1 is an implementation flowchart of circuit switched fallback in the prior art. A fallback to a GSM cell is used as an example for description, and details are as follows:
1. User equipment (user equipment, UE) makes a CS call (including a caller and a callee) in an LTE cell.
2. An eNB (evolved Node B, evolved Node B) instructs the user equipment to redirect to a GSM cell. Optionally, the eNB may add a system message of a target GSM cell to a redirection message and send the redirection message to the user equipment, so that the user equipment does not need to read the system message after falling back to the GSM cell.
3. The user equipment reselects the GSM cell.
4. The user equipment initiates a channel request Channel Request message in the GSM cell.

In the GSM cell, the user equipment accesses a network by using the channel request message, where content of the channel request message is a series of bits, that is, an access number.

When serving as a caller, the user equipment initiates a channel request message in the GSM cell, where the channel request message has the following two types of content: 111xxxxx and 0100xxxx.

The content of the channel request message is specifically selected according to a new establishment causes indication (new establishment causes indication, NECI) parameter in the system message. For example:
when NECI=0, user equipment initiates access by using 11 1xxxxx; and
when NECI=1, user equipment supporting only fullrate initiates access by using 11 1xxxxx, and two-rate user equipment initiates access by using 0100xxxx.

In an actual network, there are few user equipment supporting only full-rate, and 99% user equipment supports both full-rate and half-rate, so that it may be considered that when NECI=1, user equipment initiates access by using 0100xxxx.

Referring to Table 1, Table 1 is a table of a correspondence between an NECI in a system message and content of a channel request message.

**Table 1**

| **NECI** | **NECI=0** | **NECI=1** |
|---|---|---|
| Channel request (Channel request) | 111xxxxx | 0100xxxx |

In a paging message, content of a channel request message corresponding to a channel type indication is selected according to the channel type indication.

When serving as a callee, the user equipment initiates a channel request in the GSM cell, where the channel request message has the following four types of content: 100xxxxx, 0010xxxx, 0011xxxx, and 0001xxxx.

The content of the channel request message is specifically selected according to a user equipment capability and a channel type indication in a paging message.

Referring to Table 2, Table 2 is a table of a correspondence between content of a channel request message and a user equipment capability and a channel type indication in a paging message.

**Table 2**

| **User equipment capability Channel type indication** | **Supporting only full-rate** | **Supporting two-rate** | **Supporting only SDCCH** |
|---|---|---|---|
| Any channel (Any channel) | 100xxxxx | 100xxxxx | 100xxxxx |
| Standalone dedicated control channel (SDCCH) | 0001xxxx | 0001xxxx | 0001xxxx |
| Full-rate Traffic channel (TCH/F) | 100xxxxx | 0010xxxx | 0001xxxx |
| Half-rate Traffic channel or full-rate traffic channel (TCH/H or TCH/F) | 100xxxxx | 0011xxxx | 0001xxxx |

Because in a live network, there are few user equipment supporting only full-rate, and 99% user equipment supports two-rate, it may be considered that:
when a channel type indication is any channel, the user equipment initiates access by using 100xxxxx; or
when a channel type indication is SDCCH (standalone dedicated control channel), TCH/F (traffic channel/full), or TCH/H or TCH/F, the user equipment initiates access by using 0001xxxx, 0010xxxx, or 0011xxxx.

Referring to Table 3, Table 3 is a table of a correspondence between a channel type indication in a paging message and content of a channel request message.

**Table 3**

| **Channel type indication** | **Any channel** | **SDCCH, TCH/F, TCH/H** |
|---|---|---|
| Channel request | 100xxxxx | 0010xxxx, 0011xxxx, and 0001xxxx |

However, a device on a network side in the GSM cell cannot identify, from the channel request message, whether the user equipment falls back from the LTE cell to the GSM cell, that is, the device on the network side cannot identify whether the user equipment is CSFB user equipment. The device on the network side cannot identify that the user equipment is the CSFB user equipment.

The same as user equipment that resides in the GSM cell all the time, when falling back from the LTE cell to the GSM cell, before initiating the channel request message, the user equipment needs to determine the content of the channel request message first:
for a caller, the user equipment determines the content of the channel request message according to the NECI in the system message; and
for a callee, the user equipment determines the content of the channel request message according to the channel type indication in the paging message.

Therefore, in the GSM cell, which user equipment is common user equipment and which user equipment is the CSFB user equipment cannot be identified.

The following descriptions are merely exemplary embodiments of the present invention, but are not intended to limit the present invention. Any modification, equivalent replacement, or improvement made without departing from the principle of the present invention should fall within the protection scope of the present invention.

Referring to FIG. 2, FIG. 2 is a device for identifying circuit switched fallback user equipment according to an embodiment of the present invention. For ease of description, only a part related to this embodiment is shown, and details are as follows:
a determining unit 21 is configured to determine identification parameters of the circuit switched fallback CSFB user equipment and common user equipment, where the identification parameter of the CSFB user equipment is different from the identification parameter of the common user equipment;
a receiving unit 22 is configured to receive a channel request message sent by user equipment UE; and
an identification unit 23 is configured to identify the CSFB user equipment according to content of the channel request message and the identification parameter of the CSFB user equipment, where
the common user equipment refers to user equipment except the CSFB user equipment.

Further in the device, the identification parameter includes an NECI when the CSFB user equipment serves as a caller and a channel type indication when the CSFB user equipment serves as a callee.

Optionally, further, the device further includes:
a first configuration unit, configured to configure an NECI parameter value of a first base station subsystem of a first standard to an NECI value of the common user equipment, so that the first base station subsystem delivers the NECI value of the common user equipment to the common user equipment; and
a sending unit, configured to send an NECI value of the CSFB user equipment to a second base station subsystem of a second standard, so that the second base station subsystem delivers the NECI value of the CSFB user equipment to the CSFB user equipment.

Optionally, further, the device further includes:
a second configuration unit, configured to configure a channel type indication, sent by a first base station subsystem of a first standard to the common user equipment, to a channel type indication of the common user equipment, so that the first base station subsystem sends the channel type indication of the common user equipment to the common user equipment.

Further, in the device, the second configuration unit specifically includes:
a receiving subunit, configured to receive a paging message sent by a mobile switching center (mobile switching center, MSC); and
a configuration subunit, configured to: when a channel type indication included in the paging message is the channel type indication of the common user equipment, configure the channel type indication, sent by the first base station subsystem to the common user equipment, to the channel type indication of the common user equipment; or
configured to: when a channel type indication included in the paging message is a channel type indication of the CSFB user equipment, configure the channel type indication, sent by the first base station subsystem to the common user equipment, to the channel type indication of the common user equipment; or
configured to: when the paging message does not include a channel type indication, configure the channel type indication, sent by the first base station subsystem to the common user equipment, to the channel type indication of the common user equipment.

Further, in the device, the second configuration unit is further configured to configure a channel type indication, sent by a second base station subsystem of a second standard to the CSFB user equipment, to the channel type indication of the CSFB user equipment.

Further, in the device, the channel type indication of the common user equipment is one of the following channel type indications: a traffic channel/full TCH/F type indication, a traffic channel/half or traffic channel/full TCH/H or TCH/F type indication, and an SDCCH type indication.

Further, in the device, the channel type indication of the CSFB user equipment is an any channel Any Channel type indication.

Further, in the device, the first base station subsystem of the first standard is a base station in a Global System for Mobile Communications GSM network, and the second base station subsystem of the second standard is an evolved Node B eNB in a Long Term Evolution LTE network.

Further, in the device, the identification unit includes:
a determining subunit, configured to determine whether the content of the channel request message belongs to content of a channel request message corresponding to the identification parameter of the CSFB user equipment; and
an identification unit, configured to: if yes, determine that the user equipment that sends the channel request message is the CSFB user equipment.

Further, in the device, the device further includes:
an access unit, configured to perform access processing on the CSFB user equipment.

It should be noted that, according to an stipulation in the protocol 3GPP TS 44.018, that content of a channel request message is used to indicate an access type of user equipment belongs to the prior art, and may be applied to other embodiments of the present invention, and details are not described herein again.

In this embodiment, the device for identifying circuit switched fallback user equipment can determine identification parameters of the circuit switched fallback CSFB user equipment and common user equipment, and after receiving a channel request message sent by user equipment, rapidly identify, according to content of the channel request message and the identification parameter of the CSFB user equipment, whether the user equipment is the CSFB user equipment, so that after the CSFB user equipment is identified, a signaling exchange process between the CSFB user equipment and a network side can be simplified, thereby resolving a problem that an overall delay is relatively long when the CSFB user equipment accesses an circuit switched network.

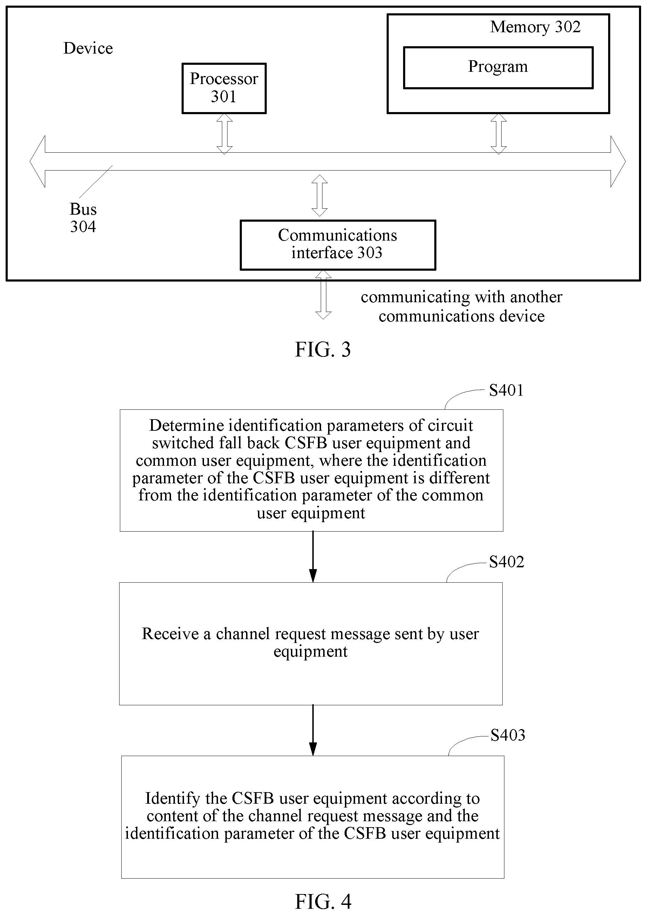

Referring to FIG. 3, FIG. 3 is a schematic structural diagram of a device for identifying circuit switched fallback user equipment. The device includes a processor, a memory, and a communications interface, where the processor, the communications interface, and the memory communicate with each other by using a bus;
the communications interface is configured to communicate with another communications device;
the processor is configured to execute a program; and
the memory is configured to store the program, where
the program is used to determine identification parameters of the circuit switched fallback CSFB user equipment and common user equipment, where the identification parameter of the CSFB user equipment is different from the identification parameter of the common user equipment;
used to receive a channel request message sent by user equipment UE; and
used to identify the CSFB user equipment according to content of the channel request message and the identification parameter of the CSFB user equipment, where
the common user equipment refers to user equipment except the CSFB user equipment.

In this embodiment, the device for identifying circuit switched fallback user equipment can determine identification parameters of the circuit switched fallback CSFB user equipment and common user equipment, and after receiving a channel request message sent by user equipment, rapidly identify, according to content of the channel request message and the identification parameter of the CSFB user equipment, whether the user equipment is the CSFB user equipment, so that after the CSFB user equipment is identified, a signaling exchange process between the CSFB user equipment and a network side can be simplified, thereby resolving a problem that an overall delay is relatively long when the CSFB user equipment accesses an circuit switched network.

Referring to FIG. 4, FIG. 4 is an implementation flowchart of a method for identifying circuit switched fallback user equipment according to an embodiment of the present invention, and details are as follows:
Step 401: Determine identification parameters of the circuit switched fallback CSFB user equipment and common user equipment, where the identification parameter of the CSFB user equipment is different from the identification parameter of the common user equipment.

In this embodiment, the identification parameter of the CSFB user equipment is different from the identification parameter of the common user equipment.

Step 402: Receive a channel request message sent by user equipment UE.

In this embodiment, a device on a network side receives, by using a network interface, the channel request message sent by the UE.

Step 403: Identify the CSFB user equipment according to content of the channel request message and the identification parameter of the CSFB user equipment.

The content of the channel request message is a binary string. For example, the content of the channel request message is 111xxxxx, 0100xxxx, 100xxxxx, 0010xxxx, 0011xxxx, and 0001xxxx, where x indicates either of "0" or "1".

The CSFB user equipment is user equipment that accesses an LTE network first, and then falls back to a GSM network and processes a CS service such as a voice service in the GSM network.

The common user equipment refers to user equipment except the CSFB user equipment.

The identification parameter in step 401 includes an NECI when the CSFB user equipment serves as a caller and a channel type indication when the CSFB user equipment serves as a callee.

It should be noted that the method may be executed by a base station subsystem (base station subsystem, BSS) in the GSM network or an independent network management device, which is not limited herein.

In this embodiment, there are four receiving cases of the receiving a channel request message sent by user equipment UE in step 402, and details are as follows:
a first case: receiving a channel request message sent by the CSFB user equipment serving as a caller in the GSM cell;
a second case: receiving a channel request message sent by the CSFB user equipment serving as a callee in the GSM cell;
a third case: receiving a channel request message sent by the common user equipment serving as a caller in the GSM cell; and
a fourth case: receiving a channel request message sent by the common user equipment serving as a callee in the GSM cell.

In this embodiment, the CSFB user equipment is identified according to the content of the channel request message and the identification parameter of the CSFB user equipment. According to content of a channel request message corresponding to the determined identification parameter of the CSFB user equipment, the CSFB user equipment can be identified by detecting the content of the channel request message sent by the user equipment.

The identifying the CSFB user equipment according to content of the channel request message and the identification parameter of the CSFB user equipment in step 403 may specifically include:
determining whether the content of the channel request message belongs to the content of the channel request message corresponding to the identification parameter of the CSFB user equipment; and
if yes, determining that the user equipment that sends the channel request message is the CSFB user equipment.

In this embodiment, the content of the channel request message of the CSFB user equipment may be determined. For example, it is determined that 111xxxxx and 100xxxxx are the content of the channel request message of the CSFB user equipment.

111xxxxx is content of a channel request message sent by the CSFB user equipment serving as a caller in a cell. 100xxxxx is content of a channel request message sent by the CSFB user equipment serving as a callee in a cell.

In this embodiment, determining whether the content of the channel request message belongs to the content of the channel request message corresponding to the identification parameter of the CSFB user equipment is determining whether the content of the channel request message corresponding to the identification parameter is 11 1xxxxx and 100xxxxx.

When it is determined that the content of the channel request message corresponding to the identification parameter is 11 1xxxxx and 100xxxxx, it indicates that the content of the channel request message is consistent with the content of the channel request message corresponding to the identification parameter of the CSFB user equipment, so that it is determined that the user equipment that sends the channel request message is the CSFB user equipment.

When it is determined that the content of the channel request message corresponding to the identification parameter is not 11 1xxxxx or 100xxxxx, it indicates that the content of the channel request message is inconsistent with the content of the channel request message corresponding to the identification parameter of the CSFB user equipment, so that it is determined that the user equipment that sends the channel request is the common user equipment.

In the method for identifying CSFB user equipment provided in this embodiment, identification parameters of the circuit switched fallback CSFB user equipment and common user equipment can be determined, and after a channel request message sent by user equipment is received, whether the user equipment is the CSFB user equipment can be rapidly identified according to content of the channel request message and the identification parameter of the CSFB user equipment, so that after the CSFB user equipment is identified, a signaling exchange process between the CSFB user equipment and a network side can be simplified, thereby resolving a problem that an overall delay is relatively long when the CSFB user equipment accesses an circuit switched network.

Optionally, in a first implementation scenario of this embodiment, when the identification parameter is the NECI, before the receiving a channel request message sent by user equipment UE, the method further includes:
configuring an NECI parameter value of a first base station subsystem of a first standard to an NECI value of the common user equipment, so that the first base station subsystem delivers the NECI value of the common user equipment to the common user equipment; and
sending an NECI value of the CSFB user equipment to a second base station subsystem of a second standard, so that the second base station subsystem delivers the NECI value of the CSFB user equipment to the CSFB user equipment.

The NECI value of the common user equipment may be any parameter value in NECI parameter values. The NECI value of the common user equipment and the NECI value of the CSFB user equipment are different parameter values in NECI parameter values. For example, the NECI value of the common user equipment is 0, and the NECI value of the CSFB user equipment is 1; or the NECI value of the common user equipment is 1, and the NECI value of the CSFB user equipment is 0.

Specifically, the second base station subsystem may set an NECI in a delivered redirection message to the NECI value of the CSFB user equipment, that is, another parameter value except the NECI value of the common user equipment in NECI parameters.

In the first base station subsystem, an NECI parameter value in a system message is set to the NECI value of the CSFB user equipment, the first base station subsystem sends, to the second base station subsystem by using a radio access network information management (RAN Information Management, RIM), the system message in which the NECI parameter value is set to the NECI value of the CSFB user equipment, and after receiving the system message in which the NECI parameter value is set to the NECI value of the CSFB user equipment, the second base station subsystem adds, to the redirection message, the system message in which the NECI parameter value is set to the NECI value of the CSFB user equipment, and delivers the redirection message to the CSFB user equipment, so that the NECI parameter value received by the CSFB user equipment is the NECI value of the CSFB user equipment.

In this embodiment, the CSFB user equipment receives the redirection message sent by the second base station subsystem, reads the system message from the redirection message, when reading that the NECI parameter value in the system message is the NECI value of the CSFB user equipment, according to Table 1, that is, the table of a correspondence between an NECI and content of a channel request message, uses content, of the channel request message, corresponding to the NECI, and sends the content of the channel request message to a corresponding device on the network side, so that the device on the network side identifies, after receiving the channel request, the CSFB user equipment and the common user equipment according to the content of the channel request message.

Optionally, the parameter values/the parameter value of the first base station subsystem and/or the second base station subsystem may be set by using a third-party device. The NECI parameter value sent by the first base station subsystem to the common user equipment is set to the NECI value of the common user equipment, and the NECI parameter value sent by the second base station subsystem to the CSFB user equipment is set to the NECI value of the CSFB user equipment. The third-party device is a device, for example, a network management device, that is connected to both the first base station subsystem and the second base station subsystem.

It should be noted that the first base station subsystem of the first standard is a base station in a Global System for Mobile Communications GSM network, and the second base station subsystem of the second standard is an evolved Node B eNB in a Long Term Evolution LTE network.

Optionally, in a second implementation scenario of this embodiment, when the identification parameter is the channel type indication, before the receiving a channel request message sent by user equipment UE, the method further includes:
configuring a channel type indication, sent by a first base station subsystem of a first standard to the common user equipment, to a channel type indication of the common user equipment, so that the first base station subsystem sends the channel type indication of the common user equipment to the common user equipment.

In this embodiment, the channel type indication sent by the first base station subsystem of the first standard to the common user equipment is configured to the channel type indication of the common user equipment, and a paging message is delivered, so that the channel type indication received by the common user equipment is the channel type indication of the common user equipment.

In this embodiment, the channel type indication of the common user equipment is one of the following channel type indications: a traffic channel/full TCH/F type indication, a traffic channel/half or traffic channel/full TCH/H or TCH/F type indication, and a standalone dedicated control channel SDCCH type indication.

In this embodiment, because a paging message sent by an existing second base station subsystem to the CSFB user equipment does not include a channel type indication, the CSFB user equipment considers by default that the channel type indication is an any channel Any Channel type indication; and in the first base station subsystem, the channel type indication in the paging message is set to the channel type indication of the common user equipment, that is, a non-Any Channel type indication. Therefore, channel type indications received by CSFB callee user equipment and common callee user equipment are different, so that the CSFB callee user equipment initiates access by using 100xxxxx, and the common callee user equipment initiates access by using any content of 0010xxxx, 0011xxxx, and 0001xxxx of a channel request message. Therefore, the device on the network side can distinguish the CSFB callee user equipment from the common callee user equipment by detecting the content of the channel request message.

In this embodiment, it should be noted that there is no time order of the configuring a channel type indication, sent by a first base station subsystem of a first standard to the common user equipment, to a channel type indication of the common user equipment and the configuring a new establishment causes indication NECI parameter value of a first base station subsystem of a first standard to an NECI value of the common user equipment. The configuring a channel type indication, sent by a first base station subsystem of a first standard to the common user equipment, to a channel type indication of the common user equipment may be performed after, before, or at the same time when the configuring a new establishment causes indication NECI parameter value of a first base station subsystem of a first standard to an NECI value of the common user equipment is performed.

The configuring a channel type indication, sent by a first base station subsystem of a first standard to the common user equipment, to a channel type indication of the common user equipment specifically includes:
receiving a paging message sent by a mobile switching center MSC; and
when a channel type indication included in the paging message is the channel type indication of the common user equipment, configuring the channel type indication, sent by the first base station subsystem to the common user equipment, to the channel type indication of the common user equipment; or
when a channel type indication included in the paging message is a channel type indication of the CSFB user equipment, configuring the channel type indication, sent by the first base station subsystem to the common user equipment, to the channel type indication of the common user equipment; or
when the paging message does not include a channel type indication, configuring the channel type indication, sent by the first base station subsystem to the common user equipment, to the channel type indication of the common user equipment.

Optionally, the method further includes:
configuring a channel type indication, sent by a second base station subsystem of a second standard to the CSFB user equipment, to the channel type indication of the CSFB user equipment.

In this embodiment, in a second base station, a channel type in a paging message or a redirection message may be set to the channel type indication of the CSFB user equipment, and the paging message or the redirection message is delivered, so that the CSFB user equipment receives the channel type indication of the CSFB user equipment.

The channel type indication of the common user equipment is one of the following channel type indications: a traffic channel/full TCH/F type indication, a traffic channel/half or traffic channel/full TCH/H or TCH/F type indication, and a standalone dedicated control channel SDCCH type indication.

The channel type indication of the CSFB user equipment is an any channel Any Channel type indication.

In this embodiment, it is ensured that a channel type indication sent by a first base station to the common user equipment is the channel type indication of the common user equipment, that is, a non-Any Channel type indication. A paging message sent by the second base station to the CSFB user equipment does not include a channel type indication, and the CSFB user equipment considers by default that the channel type indication is an any channel Any Channel type indication. Therefore, channel type indications received by the CSFB callee user equipment and the common callee user equipment are different, so that it is ensured that the CSFB callee user equipment initiates access by using 100xxxxx, and the common callee user equipment initiates access by using any content of 0010xxxx, 0011xxxx, and 0001xxxx of a channel request message. The device on the network side can distinguish the CSFB callee user equipment from the common callee user equipment by detecting the content of the channel request message.

The first base station subsystem of the first standard is a base station in a Global System for Mobile Communications GSM network, and the second base station subsystem of the second standard is an evolved Node B eNB in a Long Term Evolution LTE network.

Optionally, in a third implementation scenario of this embodiment, after the determining that the user equipment that sends the channel request message is the CSFB user equipment, the method further includes:
performing access processing on the CSFB user equipment.

In this embodiment, after it is determined that the user equipment that sends the channel request message is the CSFB user equipment, access processing is performed on the CSFB user equipment.

For example, the CSFB user equipment does not need to perform all or some of a series of signaling exchange processes such as a location area update process, a routing area update process, classmark acquiring, authentication, encryption, identity identification, and TMSI reallocation, so that the signaling exchange between the CSFB user equipment and the device on the network side is reduced, and an access speed of the CSFB user equipment is increased.

In the present invention, when user equipment serves as a caller in a GSM cell, an identification parameter, an NECI, is used.

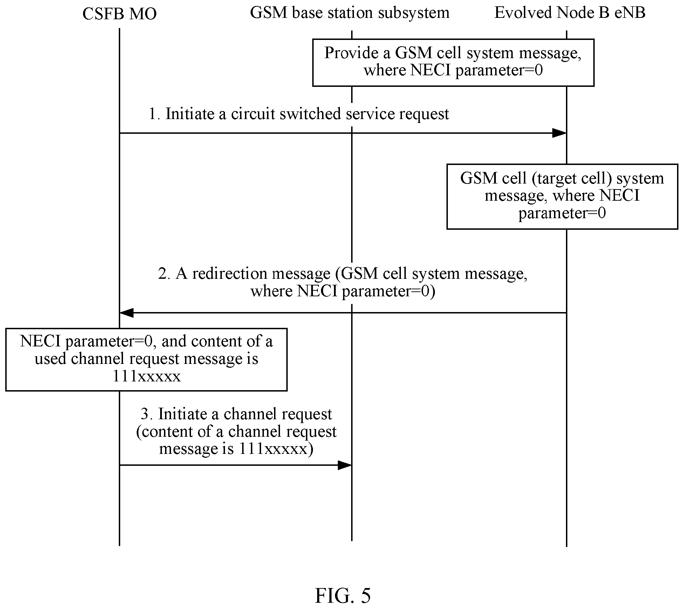

Referring to FIG. 5, FIG. 5 is an implementation flowchart of initiating, by CSFB user equipment serving as a caller in a GSM cell (CSFB MO for short), a channel request according to an embodiment of the present invention, and details are as follows:
1. A GSM base station subsystem provides a GSM cell system message SI3 to an evolved Node B eNB in an LTE cell, where an NECI is set to 0 by a BS.
2. A CSFB MO initiates a circuit switched service request in the LTE cell, receives a redirection message (which may be specifically an RRC Connection Release or a Mobility From EUTRA Command) from the eNB, acquires the GSM cell system message SI3, and reads that an NECI parameter=0 from the GSM cell system message SI3.
3. The CSFB MO reselects the GSM cell and initiates a channel request in the GSM cell. Because in the SI3 read by the CSFB MO, NECI=0, content of a channel request message used by the CSFB MO is 111xxxxx.

Correspondingly, a process in which common user equipment serves as a caller (common MO for short), that is, an existing process is described in detail as follows:
1. A common MO reads a system message SI3 in a GSM cell, where NECI=1.
2. The common MO initiates a channel request in the GSM cell. Because in the SI3 read by the common user equipment, NECI=1, content of a channel request message used by the common user equipment is 0100xxxx.

Therefore, after receiving a channel request, the GSM base station subsystem detects content of the channel request, and may identify the CSFB MO and the common MO according to different content of channel request messages.

It should be noted that when the NECI received by the CSFB MO is set to 1, the NECI received by the common MO is correspondingly set to 0, and when the NECI received by the CSFB MO is set to 0, the NECI received by the common MO is correspondingly set to 1, so that the CSFB MO and the common MO use, according to the different NECIs, the content of the different channel request messages to complete access.

In this embodiment, after receiving a channel request, a GSM cell can rapidly identify, by detecting content of a channel request message, whether user equipment is CSFB user equipment, so that after a CSFB MO and a common MO are identified, a device on a network side can simplify a signaling exchange process between the CSFB MO and the network side, thereby resolving a problem, that is caused because the device on the network side cannot rapidly identify that the user equipment is the CSFB user equipment and performs a normal signaling process, that an overall delay is relatively long when the CSFB user equipment accesses an circuit switched network.

In the present invention, when user equipment serves as a callee in a GSM cell, an identification parameter: a channel type indication is used.

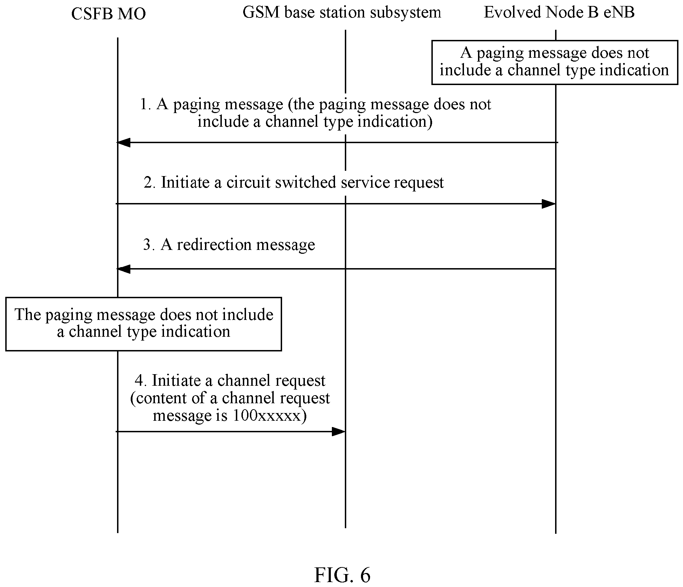

Referring to FIG. 6, FIG. 6 is an implementation flowchart of initiating, by CSFB user equipment serving as a callee in a GSM cell (CSFB MT for short), a channel request according to an embodiment of the present invention, and details are as follows:
1. After receiving a paging message in an LTE cell, a CSFB MT initiates a circuit switched service request in the LTE cell.
2. The CSFB MT receives a redirection message (Mobility From EUTRA Command) from an eNB.
3. The CSFB MT reselects the GSM cell and initiates a channel request in the GSM cell. Because the paging message previously received by the user equipment does not include a channel type indication, content of a channel request message used by the CSFB MT is 100xxxxx.

Correspondingly, for ease of description, an example of a process in which common user equipment serves as a callee in a cell (common MT for short) is used, and details are as follows:
1. A GSM base station subsystem delivers a paging message to a common MT and sets a channel type in the paging message sent to the common MT to TCH/F, TCH/H or TCH/F, or SDCCH (that is, non-Any Channel).
2. The common MT receives the paging message. Because a channel type in the paging message is a non-Any Channel, content of a channel request message used by the common MT is any one of 0010xxxx, 0011xxxx, and 0001xxxx.

The CSFB MT initiates access by using 100xxxxx, the common MT initiates access by using any one of 0010xxxx, 0011xxxx, and 0001xxxx as the content of the channel request message. Therefore, after receiving a channel request, the GSM base station subsystem detects content of the channel request, and may identify the CSFB MO and the common MO according to the different content of the channel request messages.

In this embodiment, when receiving a channel request, a GSM base station subsystem can rapidly identify, by detecting content of a channel request message, whether user equipment is CSFB user equipment. After a CSFB MT and a common MT are identified, a device on a network side can simplify a signaling exchange process between the CSFB MT and the network side, thereby resolving a problem, that is caused because the device on the network side cannot rapidly identify that the user equipment is the CSFB user equipment and performs a normal signaling process, that an overall delay is relatively long when the CSFB user equipment accesses an circuit switched network.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A device for identifying circuit switched fallback user equipment, comprising:
a determining unit (21), configured to determine identification parameters of the circuit switched fallback, CSFB, user equipment and common user equipment, wherein the identification parameter of the CSFB user equipment is different from the identification parameter of the common user equipment;
a receiving unit (22), configured to receive a channel request message sent by user equipment, UE; and
an identification unit (23), configured to identify the CSFB user equipment according to content of the channel request message and the identification parameter of the CSFB user equipment, wherein
the common user equipment refers to user equipment except the CSFB user equipment;
**characterized in that** the identification parameter comprises a new establishment causes indication, NECI, when the CSFB user equipment serves as a caller and a channel type indication when the CSFB user equipment serves as a callee.

2. The device according to claim 1, wherein the device further comprises:
a first configuration unit, configured to configure an NECI parameter value of a first base station subsystem of a first standard to an NECI value of the common user equipment for the first base station subsystem delivering the NECI value of the common user equipment to the common user equipment; and
a sending unit, configured to send an NECI value of the CSFB user equipment to a second base station subsystem of a second standard for the second base station subsystem delivering the NECI value of the CSFB user equipment to the CSFB user equipment.

3. The device according to claim 1, wherein the device further comprises:
a second configuration unit, configured to configure a channel type indication, sent by a first base station subsystem of a first standard to the common user equipment, to a channel type indication of the common user equipment for the first base station subsystem sending the channel type indication of the common user equipment to the common user equipment.

4. The device according to claim 3, wherein the second configuration unit specifically comprises:
a receiving subunit, configured to receive a paging message sent by a mobile switching center, MSC; and
a configuration subunit, configured to: when a channel type indication comprised in the paging message is the channel type indication of the common user equipment, configure the channel type indication, sent by the first base station subsystem to the common user equipment, to the channel type indication of the common user equipment; or
configured to: when a channel type indication comprised in the paging message is a channel type indication of the CSFB user equipment, configure the channel type indication, sent by the first base station subsystem to the common user equipment, to the channel type indication of the common user equipment; or
configured to: when the paging message does not comprise a channel type indication, configure the channel type indication, sent by the first base station subsystem to the common user equipment, to the channel type indication of the common user equipment.

5. The device according to claim 3 or 4, wherein the second configuration unit is further configured to configure a channel type indication, sent by a second base station subsystem of a second standard to the CSFB user equipment, to the channel type indication of the CSFB user equipment.

6. The device according to any one of claims 3 to 5, wherein:
the channel type indication of the common user equipment is one of the following channel type indications: supporting only a full-rate traffic channel, TCH/F, type indication, supporting a half-rate traffic channel, TCH/H, or TCH/F type indication, and supporting a standalone dedicated control channel, SDCCH, type indication; and/or,
the channel type indication of the CSFB user equipment is a supporting Any Channel type indication.

7. The device according to any one of claims 2 to 6, wherein the first base station subsystem of the first standard is a base station in a Global System for Mobile Communications, GSM, network, and the second base station subsystem of the second standard is an evolved Node B, eNB, in a Long Term Evolution, LTE, network.

8. The device according to any one of claims 1 to 7, wherein the identification unit (23) comprises:
a determining subunit, configured to determine whether the content of the channel request message belongs to content of a channel request message corresponding to the identification parameter of the CSFB user equipment; and
an identification subunit, configured to: when a determining result of the determining subunit is yes, determine that the user equipment that sends the channel request message is the CSFB user equipment.

9. A method for identifying circuit switched fallback user equipment, comprising:
determining (401) identification parameters of the circuit switched fallback, CSFB, user equipment and common user equipment, wherein the identification parameter of the CSFB user equipment is different from the identification parameter of the common user equipment;
receiving (402) a channel request message sent by user equipment, UE; and
identifying (403) the CSFB user equipment according to content of the channel request message and the identification parameter of the CSFB user equipment, wherein
the common user equipment refers to user equipment except the CSFB user equipment;
charcterized in that the identification parameter comprises a new establishment causes indication, NECI, when the the CSFB user equipment serves as a caller and a channel type indication when the the CSFB user equipment serves as a callee.

10. The method according to claim 9, when the identification parameter is the NECI, before the receiving a channel request message sent by user equipment UE, further comprising:
configuring an NECI parameter value of a first base station subsystem of a first standard to an NECI value of the common user equipment for the first base station subsystem delivering the NECI value of the common user equipment to the common user equipment; and
sending an NECI value of the CSFB user equipment to a second base station subsystem of a second standard for the second base station subsystem delivering the NECI value of the CSFB user equipment to the CSFB user equipment.

11. The method according to claim 9, when the identification parameter is the channel type indication, before the receiving a channel request message sent by user equipment UE, further comprising:
configuring a channel type indication, sent by a first base station subsystem of a first standard to the common user equipment, to a channel type indication of the common user equipment for the first base station subsystem sending the channel type indication of the common user equipment to the common user equipment.

12. The method according to claim 11, wherein the configuring a channel type indication, sent by a first base station subsystem of a first standard to the common user equipment, to a channel type indication of the common user equipment specifically comprises:
receiving a paging message sent by a mobile switching center, MSC; and
when a channel type indication comprised in the paging message is the channel type indication of the common user equipment, configuring the channel type indication, sent by the first base station subsystem to the common user equipment, to the channel type indication of the common user equipment; or
when a channel type indication comprised in the paging message is a channel type indication of the CSFB user equipment, configuring the channel type indication, sent by the first base station subsystem to the common user equipment, to the channel type indication of the common user equipment; or
when the paging message does not comprise a channel type indication, configuring the channel type indication, sent by the first base station subsystem to the common user equipment, to the channel type indication of the common user equipment.

13. The method according to claim 11 or 12, wherein the method further comprises:
configuring a channel type indication, sent by a second base station subsystem of a second standard to the CSFB user equipment, to the channel type indication of the CSFB user equipment.

14. The method according to any one of claims 11 to 13, wherein:
the channel type indication of the common user equipment is one of the following channel type indications: supporting only a full-rate traffic channel, TCH/F, type indication, supporting a half-rate traffic channel, TCH/H, or TCH/F type indication, and supporting a standalone dedicated control channel, SDCCH, type indication; and/or,
the channel type indication of the CSFB user equipment is a supporting Any Channel type indication.

15. The method according to any one of claims 10 to 14, wherein the first base station subsystem of the first standard is a base station in a Global System for Mobile Communications, GSM, network, and the second base station subsystem of the second standard is an evolved Node B, eNB, in a Long Term Evolution, LTE, network.

16. The method according to any one of claims 9 to 15, wherein the identifying the CSFB user equipment according to content of the channel request message and the identification parameter of the CSFB user equipment comprises:
determining whether the content of the channel request message belongs to content of a channel request message corresponding to the identification parameter of the CSFB user equipment; and
if the content of the channel request message belongs to the content of the channel request message corresponding to the identification parameter of the CSFB user equipment, determining that the user equipment that sends the channel request message is the CSFB user equipment.

## Patentansprüche

1. Identifikationsvorrichtung für leitungsvermittelte Fallbackbenutzervorrichtung, Folgendes umfassend:
eine bestimmende Einheit (21), die konfiguriert ist, um Identifikationsparameter des leitungsvermittelten Fallbacks, CSFB, der Benutzervorrichtung und der gemeinsamen Benutzervorrichtung zu bestimmen, wobei der Identifikationsparameter der CSFB-Benutzervorrichtung vom Identifikationsparameter der gemeinsamen Benutzervorrichtung verschieden ist;
eine empfangende Einheit (22), die konfiguriert ist, um eine Kanalanforderungsnachricht zu empfangen, die von einer Benutzervorrichtung, UE, gesendet wird; und
eine Identifikationseinheit (23), die konfiguriert ist, um die CSFB-Benutzervorrichtung gemäß dem Inhalt der Kanalanforderungsnachricht und dem Identifikationsparameter der CSFB-Benutzervorrichtung zu identifizieren, wobei sich die gemeinsame Benutzervorrichtung auf die Benutzervorrichtung mit Ausnahme der CSFB-Benutzervorrichtung bezieht;
**dadurch gekennzeichnet, dass** der Identifikationsparameter eine NECI (New Establishment Causes Indication) umfasst, wenn die CSFB-Benutzervorrichtung als ein Anrufer dient, und eine Kanaltypindikation umfasst, wenn die CSFB-Benutzervorrichtungals Angerufener dient.

2. Vorrichtung nach Anspruch 1, wobei die Vorrichtung ferner umfasst:
eine erste Konfigurationseinheit, die konfiguriert ist, um einen NECI-Parameterwert eines ersten ""Base Station Subsystem"" eines ersten Standards auf einen NECI-Wert der gemeinsamen Benutzervorrichtung für das erste "Base Station Subsystem" zu konfigurieren, das den NECI-Wert der gemeinsamen Benutzervorrichtung an die gemeinsame Benutzervorrichtung liefert; und
eine sendende Einheit, die konfiguriert ist, um einen NECI-Wert der CSFB-Benutzervorrichtung an ein zweites "Base Station Subsystem" eines zweiten Standards für das zweite "Base Station Subsystem" zu senden, das den NECI-Wert der CSFB- Benutzervorrichtung an die CSFB-Benutzervorrichtung liefert.

3. Vorrichtung nach Anspruch 1, wobei die Vorrichtung ferner umfasst:
eine zweite Konfigurationseinheit, die konfiguriert ist, um eine Kanaltypindikation, die von einem ersten "Base Station Subsystem" eines ersten Standards an die gemeinsame Benutzervorrichtung gesendet wird, auf eine Kanaltypindikation der gemeinsamen Benutzervorrichtung für das erste "Base Station Subsystem" zu konfigurieren, die die Kanaltypindikation der gemeinsamen Benutzervorrichtung an die gemeinsame Benutzervorrichtung sendet.

4. Vorrichtung nach Anspruch 3, wobei die zweite Konfigurationseinheit insbesondere umfasst:
eine empfangende Untereinheit, die konfiguriert ist, um eine von einer Mobilvermittlungsstelle, MSC, gesendete Funkrufnachricht zu empfangen; und
eine Konfigurationsuntereinheit, die konfiguriert ist, um: wenn eine in der Funkrufnachricht enthaltene Kanaltypindikation die Kanaltypindikation der gemeinsamen Benutzervorrichtung ist, die Kanaltypindikation, die vom ersten "Base Station Subsystem" an die gemeinsame Benutzervorrichtung gesendet wird, auf die Kanaltypindikation der gemeinsamen Benutzervorrichtung zu konfigurieren; oder
die konfiguriert ist, um: wenn eine in der Funkrufnachricht enthaltene Kanaltypindikation eine Kanaltypindikation der CSFB-Benutzervorrichtung ist, die Kanaltypindikation, die vom ersten "Base Station Subsystem" an die gemeinsame Benutzervorrichtung gesendet wird, auf die Kanaltypindikation der gemeinsamen Benutzereinrichtung zu konfigurieren; oder
die konfiguriert ist, um: wenn die Funkrufnachricht keine Kanaltypindikation umfasst, die Kanaltypindikation, die vom ersten "Base Station Subsystem" an die gemeinsame Benutzervorrichtung gesendet wird, auf die Kanaltypindikation der gemeinsamen Benutzervorrichtung zu konfigurieren.

5. Vorrichtung nach Anspruch 3 oder 4, wobei die zweite Konfigurationseinheit ferner konfiguriert ist, um eine Kanaltypindikation, die von einem zweiten "Base Station Subsystem" eines zweiten Standards an die CSFB-Benutzervorrichtung gesendet wird, auf die Kanaltypindikation der CSFB-Benutzervorrichtung zu konfigurieren.

6. Vorrichtung nach einem beliebigen der Ansprüche 3 bis 5, wobei:
die Kanaltypindikation der gemeinsamen Benutzervorrichtung eine der folgenden Kanaltypindikationen ist: Typindikation für die ausschließliche Unterstützung eines Vollraten-Verkehrskanals, TCH/F, Typindikation für die Unterstützung eines Halbraten-Verkehrskanals, TCH/H oder TCH/F, und Typenindikation für die Unterstützung eines eigenständigen dedizierten Steuerkanals, SDCCH; und/oder,
die Kanaltypindikation der CSFB-Benutzervorrichtung eine Typindikation für die Unterstützung jeglichen Kanals ist.

7. Vorrichtung nach einem beliebigen der Ansprüche 2 bis 6, wobei das erste "Base Station Subsystem" des ersten Standards eine "Base Station" in einem "Global System for Mobile Communications Network" (GSM) und das zweite "Base Station Subsystem" des zweiten Standards eine "Evolved Node B", eNB, in einem "Long Term Evolution Network" (LTE) ist.

8. Vorrichtung nach einem beliebigen der Ansprüche 1 bis 7, wobei die Identifikationseinheit (23) umfasst:
eine bestimmende Untereinheit, die konfiguriert ist, um zu bestimmen, ob der Inhalt der Kanalanforderungsnachricht zum Inhalt einer Kanalanforderungsnachricht gehört, die dem Identifikationsparameter der CSFB-Benutzervorrichtung entspricht; und
eine Identifikationsuntereinheit, die so konfiguriert ist, dass: wenn ein Bestimmungsergebnis der bestimmenden Untereinheit ja ist, bestimmt wird, dass die Benutzervorrichtung, die die Kanalanforderungsnachricht sendet, die CSFB-Benutzervorrichtung ist.

9. Identifikationsverfahren für leitungsvermittelte Fallbackbenutzervorrichtung, umfassend:
Bestimmen (401) von Identifikationsparametern der leitungsvermitteltem Fallback(CSFB)-Benutzervorrichtung und der gemeinsamen Benutzervorrichtung, wobei sich der Identifikationsparameter der CSFB-Benutzervorrichtung vom Identifikationsparameter der gemeinsamen Benutzervorrichtung unterscheidet;
Empfangen (402) einer von der Benutzervorrichtung, UE, gesendeten Kanalanforderungsnachricht; und
Identifizieren (403) der CSFB-Benutzervorrichtung gemäß dem Inhalt der Kanalanforderungsnachricht und dem Identifikationsparameter der CSFB-Benutzervorrichtung, wobei
sich die gemeinsame Benutzervorrichtung auf eine Benutzervorrichtung mit Ausnahme der CSFB-Benutzervorrichtung bezieht;
**dadurch gekennzeichnet, dass** der Identifikationsparameter eine NECI (New Establishment Causes Indication) umfasst, wenn die CSFB-Benutzervorrichtung als ein Anrufer dient, und eine Kanaltypindikation umfasst, wenn die CSFB-Benutzervorrichtung als Angerufener dient.

10. Verfahren nach Anspruch 9, wenn der Identifikationsparameter die NECI ist, vor dem Empfangen einer von der Benutzervorrichtung UE gesendeten Kanalanforderungsnachricht, ferner umfassend:
Konfigurieren eines NECI-Parameterwertes eines ersten ""Base Station Subsystem"s" eines ersten Standards auf einen NECI-Wert der gemeinsamen Benutzervorrichtung für das erste "Base Station Subsystem", das den NECI-Wert der gemeinsamen Benutzervorrichtung an die gemeinsame Benutzervorrichtung liefert; und
Senden eines NECI-Wertes der CSFB-Benutzervorrichtung an ein zweites "Base Station Subsystem" eines zweiten Standards für das zweite "Base Station Subsystem", das den NECI-Wert der CSFB-Benutzervorrichtung an die CSFB-Benutzervorrichtung liefert.

11. Verfahren nach Anspruch 9, wenn der Identifikationsparameter die Kanaltypindikation ist, vor dem Empfangen einer von der Benutzervorrichtung UE gesendeten Kanalanforderungsnachricht, ferner umfassend:
Konfigurieren einer Kanaltypindikation, die von einem ersten "Base Station Subsystem" eines ersten Standards an die gemeinsame Benutzervorrichtung gesendet wird, auf eine Kanaltypindikation der gemeinsamen Benutzervorrichtung für das erste "Base Station Subsystem", die die Kanaltypindikation der gemeinsamen Benutzervorrichtung an die gemeinsame Benutzervorrichtung sendet.

12. Verfahren nach Anspruch 11, wobei das Konfigurieren einer Kanaltypindikation, die von einem ersten "Base Station Subsystem" eines ersten Standards an die gemeinsame Benutzervorrichtung gesendet wird, auf eine Kanaltypindikation der gemeinsamen Benutzervorrichtung, insbesondere umfasst:
Empfangen einer von einer Mobilvermittlungsstelle, MSC, gesendeten Funkrufnachricht; und
wenn eine in der Funkrufnachricht enthaltene Kanaltypindikation die Kanaltypindikation der gemeinsamen Benutzervorrichtung ist, Konfigurieren der Kanaltypindikation, die vom ersten "Base Station Subsystem" an die gemeinsame Benutzervorrichtung gesendet wird, auf die Kanaltypindikation der gemeinsamen Benutzervorrichtung; oder
wenn eine in der Funkrufnachricht enthaltene Kanaltypindikation eine Kanaltypindikation der CSFB-Benutzervorrichtung ist, Konfigurieren der Kanaltypindikation, die vom ersten "Base Station Subsystem" an die gemeinsame Benutzervorrichtung gesendet wird, auf die Kanaltypindikation der gemeinsamen Benutzereinrichtung; oder
wenn die Funkrufnachricht keine Kanaltypindikation umfasst, Konfigurieren der Kanaltypindikation, die vom ersten "Base Station Subsystem" an die gemeinsame Benutzervorrichtung gesendet wird, auf die Kanaltypindikation der gemeinsamen Benutzervorrichtung.

13. Verfahren nach Anspruch 11 oder 12, wobei das Verfahren ferner umfasst:
Konfigurieren einer Kanaltypindikation, die von einem zweiten "Base Station Subsystem" eines zweiten Standards an die CSFB-Benutzervorrichtung gesendet wird, auf die Kanaltypindikation der CSFB-Benutzervorrichtung.

14. Verfahren nach einem beliebigen der Ansprüche 11 bis 13, wobei:
die Kanaltypindikation der gemeinsamen Benutzervorrichtung eine der folgenden Kanaltypindikationen ist: Typindikation für die ausschließliche Unterstützung eines Vollraten-Verkehrskanals, TCH/F, Typindikation für die Unterstützung eines Halbraten-Verkehrskanals, TCH/H oder TCH/F, und Typenindikation für die Unterstützung eines eigenständigen dedizierten Steuerkanals, SDCCH; und/oder,
die Kanaltypindikation der CSFB-Benutzervorrichtung eine Typindikation für die Unterstützung jeglichen Kanals ist.

15. Verfahren nach einem beliebigen der Ansprüche 10 bis 14, wobei das erste "Base Station Subsystem" des ersten Standards eine "Base Station" in einem "Global System for Mobile Communications Network" (GSM) und das zweite ""Base Station Subsystem"" des zweiten Standards eine "Evolved Node B", eNB, in einem "Long Term Evolution Network" (LTE) ist.

16. Verfahren nach einem beliebigen der Ansprüche 9 bis 15, wobei die Identifikation der CSFB-Benutzervorrichtung gemäß dem Inhalt der Kanalanforderungsnachricht und dem Identifikationsparameter der CSFB-Benutzervorrichtung umfasst:
Bestimmen, ob der Inhalt der Kanalanforderungsnachricht zum Inhalt einer Kanalanforderungsnachricht gehört, die dem Identifikationsparameter der CSFB-Benutzervorrichtung entspricht; und
wenn der Inhalt der Kanalanforderungsnachricht zu dem Inhalt der Kanalanforderungsnachricht gehört, die dem Identifikationsparameter der CSFB-Benutzervorrichtung entspricht, Bestimmen, dass die Benutzervorrichtung, die die Kanalanforderungsnachricht sendet, die CSFB-Benutzervorrichtung ist.

## Revendications

1. Dispositif d'identification d'équipement d'utilisateur en repli par commutation de circuits, comportant :
une unité (21) de détermination, configurée pour déterminer des paramètres d'identification de l'équipement d'utilisateur en repli par commutation de circuits, CSFB, et de l'équipement d'utilisateur ordinaire, le paramètre d'identification de l'équipement d'utilisateur en CSFB étant différent du paramètre d'identification de l'équipement d'utilisateur ordinaire ;
une unité (22) de réception, configurée pour recevoir un message de demande de canal émis par un équipement d'utilisateur, UE ; et
une unité (23) d'identification, configurée pour identifier l'équipement d'utilisateur en CSFB d'après un contenu du message de demande de canal et le paramètre d'identification de l'équipement d'utilisateur en CSFB,
l'équipement d'utilisateur ordinaire désignant un équipement d'utilisateur à l'exception de l'équipement d'utilisateur en CSFB ;
**caractérisé en ce que** le paramètre d'identification comporte une indication de causes de nouvel établissement, NECI, lorsque l'équipement d'utilisateur en CSFB fait fonction d'appelant et une indication de type de canal lorsque l'équipement d'utilisateur en CSFB fait fonction d'appelé.

2. Dispositif selon la revendication 1, le dispositif comportant en outre :
une première unité de configuration, configurée pour configurer une valeur de paramètre de NECI d'un premier sous-système de station de base d'une première norme suivant une valeur de NECI de l'équipement d'utilisateur ordinaire pour le premier sous-système de station de base délivrant la valeur de NECI de l'équipement d'utilisateur ordinaire à l'équipement d'utilisateur ordinaire ; et
une unité d'émission, configurée pour envoyer une valeur de NECI de l'équipement d'utilisateur en CSFB à un deuxième sous-système de station de base d'une deuxième norme pour le deuxième sous-système de station de base délivrant la valeur de NECI de l'équipement d'utilisateur en CSFB à l'équipement d'utilisateur en CSFB.

3. Dispositif selon la revendication 1, le dispositif comportant en outre :
une deuxième unité de configuration, configurée pour configurer une indication de type de canal, envoyée par un premier sous-système de station de base d'une première norme à l'équipement d'utilisateur ordinaire, suivant une indication de type de canal de l'équipement d'utilisateur ordinaire pour le premier sous-système de station de base envoyant l'indication de type de canal de l'équipement d'utilisateur ordinaire à l'équipement d'utilisateur ordinaire.

4. Dispositif selon la revendication 3, la deuxième unité de configuration comportant spécifiquement :
une sous-unité de réception, configurée pour recevoir un message de radiorecherche émis par un centre de commutation pour mobiles, MSC ; et
une sous-unité de configuration, configurée pour : lorsqu'une indication de type de canal comprise dans le message de radiorecherche est l'indication de type de canal de l'équipement d'utilisateur ordinaire, configurer l'indication de type de canal, envoyée par le premier sous-système de station de base à l'équipement d'utilisateur ordinaire, suivant l'indication de type de canal de l'équipement d'utilisateur ordinaire ; ou
configurée pour : lorsqu'une indication de type de canal comprise dans le message de radiorecherche est une indication de type de canal de l'équipement d'utilisateur en CSFB, configurer l'indication de type de canal, envoyée par le premier sous-système de station de base à l'équipement d'utilisateur ordinaire, suivant l'indication de type de canal de l'équipement d'utilisateur ordinaire ; ou
configurée pour : lorsque le message de radiorecherche ne comporte pas d'indication de type de canal, configurer l'indication de type de canal, envoyée par le premier sous-système de station de base à l'équipement d'utilisateur ordinaire, suivant l'indication de type de canal de l'équipement d'utilisateur ordinaire.

5. Dispositif selon la revendication 3 ou 4, la deuxième unité de configuration étant en outre configurée pour configure une indication de type de canal, envoyée par un deuxième sous-système de station de base d'une deuxième norme à l'équipement d'utilisateur en CSFB, suivant l'indication de type de canal de l'équipement d'utilisateur en CSFB.

6. Dispositif selon l'une quelconque des revendications 3 à 5 :
l'indication de type de canal de l'équipement d'utilisateur ordinaire étant une des indications suivantes de type de canal : indication de type ne prenant en charge qu'un canal de trafic à plein débit, TCH/F, indication de type prenant en charge un canal de trafic à demi-débit, TCH/H, ou un TCH/F, et indication de type prenant en charge un canal de commande dédié autonome, SDCCH ; et/ou
l'indication de type de canal de l'équipement d'utilisateur en CSFB étant une indication de type prenant en charge un canal quelconque.

7. Dispositif selon l'une quelconque des revendications 2 à 6, le premier sous-système de station de base de la première norme étant une station de base dans un réseau du Système mondial de communications mobiles, GSM, et le deuxième sous-système de station de base de la deuxième norme étant un noeud B évolué, eNB, dans un réseau d'évolution à long terme, LTE.

8. Dispositif selon l'une quelconque des revendications 1 à 7, l'unité (23) d'identification comportant :
une sous-unité de détermination, configurée pour déterminer si le contenu du message de demande de canal appartient au contenu d'un message de demande de canal correspondant au paramètre d'identification de l'équipement d'utilisateur en CSFB ; et
une sous-unité d'identification, configurée pour : lorsqu'un résultat de détermination de la sous-unité de détermination est affirmatif, déterminer que l'équipement d'utilisateur qui émet le message de demande de canal est l'équipement d'utilisateur en CSFB.

9. Procédé d'identification d'équipement d'utilisateur en repli par commutation de circuits, comportant les étapes consistant à :
déterminer (401) des paramètres d'identification de l'équipement d'utilisateur en repli par commutation de circuits, CSFB, et de l'équipement d'utilisateur ordinaire, le paramètre d'identification de l'équipement d'utilisateur en CSFB étant différent du paramètre d'identification de l'équipement d'utilisateur ordinaire ;
recevoir (402) un message de demande de canal émis par un équipement d'utilisateur, UE ; et
identifier (403) l'équipement d'utilisateur en CSFB d'après un contenu du message de demande de canal et le paramètre d'identification de l'équipement d'utilisateur en CSFB,
l'équipement d'utilisateur ordinaire désignant un équipement d'utilisateur à l'exception de l'équipement d'utilisateur en CSFB ;
**caractérisé en ce que** le paramètre d'identification comporte une indication de causes de nouvel établissement, NECI, lorsque l'équipement d'utilisateur en CSFB fait fonction d'appelant et une indication de type de canal lorsque l'équipement d'utilisateur en CSFB fait fonction d'appelé.

10. Procédé selon la revendication 9, comportant en outre, lorsque le paramètre d'identification est la NECI, avant la réception d'un message de demande de canal émis par un équipement d'utilisateur UE, les étapes consistant à :
configurer une valeur de paramètre de NECI d'un premier sous-système de station de base d'une première norme suivant une valeur de NECI de l'équipement d'utilisateur ordinaire pour le premier sous-système de station de base délivrant la valeur de NECI de l'équipement d'utilisateur ordinaire à l'équipement d'utilisateur ordinaire ; et
envoyer une valeur de NECI de l'équipement d'utilisateur en CSFB à un deuxième sous-système de station de base d'une deuxième norme pour le deuxième sous-système de station de base délivrant la valeur de NECI de l'équipement d'utilisateur en CSFB à l'équipement d'utilisateur en CSFB.

11. Procédé selon la revendication 9, lorsque le paramètre d'identification est l'indication de type de canal, avant la réception d'un message de demande de canal émis par un équipement d'utilisateur UE, comportant en outre l'étape consistant à :
configurer une indication de type de canal, envoyée par un premier sous-système de station de base d'une première norme à l'équipement d'utilisateur ordinaire, suivant une indication de type de canal de l'équipement d'utilisateur ordinaire pour le premier sous-système de station de base envoyant l'indication de type de canal de l'équipement d'utilisateur ordinaire à l'équipement d'utilisateur ordinaire.

12. Procédé selon la revendication 11, la configuration d'une indication de type de canal, envoyée par un premier sous-système de station de base d'une première norme à l'équipement d'utilisateur ordinaire, suivant une indication de type de canal de l'équipement d'utilisateur ordinaire comportant spécifiquement les étapes consistant à :
recevoir un message de radiorecherche émis par un centre de commutation pour mobiles, MSC ; et
lorsqu'une indication de type de canal comprise dans le message de radiorecherche est l'indication de type de canal de l'équipement d'utilisateur ordinaire, configurer l'indication de type de canal, envoyée par le premier sous-système de station de base à l'équipement d'utilisateur ordinaire, suivant l'indication de type de canal de l'équipement d'utilisateur ordinaire ; ou
lorsqu'une indication de type de canal comprise dans le message de radiorecherche est une indication de type de canal de l'équipement d'utilisateur en CSFB, configurer l'indication de type de canal, envoyée par le premier sous-système de station de base à l'équipement d'utilisateur ordinaire, suivant l'indication de type de canal de l'équipement d'utilisateur ordinaire ; ou
lorsque le message de radiorecherche ne comporte pas d'indication de type de canal, configurer l'indication de type de canal, envoyée par le premier sous-système de station de base à l'équipement d'utilisateur ordinaire, suivant l'indication de type de canal de l'équipement d'utilisateur ordinaire.

13. Procédé selon la revendication 11 ou 12, le procédé comportant en outre l'étape consistant à :
configurer une indication de type de canal, envoyée par un deuxième sous-système de station de base d'une deuxième norme à l'équipement d'utilisateur en CSFB, suivant l'indication de type de canal de l'équipement d'utilisateur en CSFB.

14. Procédé selon l'une quelconque des revendications 11 à 13 :
l'indication de type de canal de l'équipement d'utilisateur ordinaire étant une des indications suivantes de type de canal : indication de type ne prenant en charge qu'un canal de trafic à plein débit, TCH/F, indication de type prenant en charge un canal de trafic à demi-débit, TCH/H, ou un TCH/F, et indication de type prenant en charge un canal de commande dédié autonome, SDCCH ; et/ou
l'indication de type de canal de l'équipement d'utilisateur en CSFB étant une indication de type prenant en charge un canal quelconque.

15. Procédé selon l'une quelconque des revendications 10 à 14, le premier sous-système de station de base de la première norme étant une station de base dans un réseau du Système mondial de communications mobiles, GSM, et le deuxième sous-système de station de base de la deuxième norme étant un noeud B évolué, eNB, dans un réseau d'évolution à long terme, LTE.

16. Procédé selon l'une quelconque des revendications 9 à 15, l'identification de l'équipement d'utilisateur en CSFB d'après un contenu du message de demande de canal et le paramètre d'identification de l'équipement d'utilisateur en CSFB comportant les étapes consistant à :
déterminer si le contenu du message de demande de canal appartient au contenu d'un message de demande de canal correspondant au paramètre d'identification de l'équipement d'utilisateur en CSFB ; et
si le contenu du message de demande de canal appartient au contenu du message de demande de canal correspondant au paramètre d'identification de l'équipement d'utilisateur en CSFB, déterminer que l'équipement d'utilisateur qui émet le message de demande de canal est l'équipement d'utilisateur en CSFB.
